# EUROPÄISCHE PATENTANMELDUNG

(11) **EP 4 556 187 A1**
(43) Veröffentlichungstag der Anmeldung: **21.05.2025**
(21) Anmeldenummer: 23210285.5
(22) Anmeldetag: 16.11.2023
(51) Int. Cl.: B28B 11/24, B28B 3/20, B28B 3/26, C04B 35/626, C04B 35/111, C04B 35/80

(54) **VERFAHREN ZUR BEHANDLUNG EINES KERAMISCHEN VERSATZES, KERAMISCHE STIFTE UND VORRICHTUNG ZUR BEHANDLUNG EINES KERAMISCHEN VERSATZES**

(71) Anmelder: Ceram Austria GmbH, 8523 Frauental (AT)
(72) Erfinder: FAULAND, Gernot, 8522 Groß St. Florian (AT); HOFMEISTER, Karl, 8541 Bad Schwanberg (AT); KOGLER, Georg, 8530 Deutschlandsberg (AT); NILICA, Roland, 8733 St. Marein Feistritz (AT); WEGSCHEIDER, Stefan, 8020 Graz (AT)
(74) Vertreter: Berkenbrink, Kai-Oliver

(57) **Zusammenfassung**

Die Erfindung betrifft ein Verfahren zur Behandlung eines keramischen Versatzes, keramische Stifte sowie eine Vorrichtung zur Behandlung eines keramischen Versatzes. Das Verfahren umfasst die folgenden Schritte: (a) zur Verfügungstellung eines keramischen Versatzes; (b) zur Verfügungstellung eines Werkzeuges zum Formen des keramischen Versatzes, z.B. eines Formwerkzeuges (103) eines Extruders (100); (c) Formen des keramischen Versatzes durch das Werkzeug zu einem Bündel (400) von einzelnen Strängen (401); und (d) Trocknen mittels einer Trockenvorrichtung (200) wenigstens eines Abschnitts des Bündels (400) in der Luft, d.h. bevor er in Kontakt mit einem darunter liegenden festen Körper - z.B. mit einer Schale, einem Tablett oder einem Bandförderer (300) - kommt, mit Ausnahme von einem anderen, bereits getrockneten Abschnitt des Bündels (400).

## Beschreibung

Die Erfindung betrifft ein Verfahren zur Behandlung eines keramischen Versatzes, keramische Stifte sowie eine Vorrichtung zur Behandlung eines keramischen Versatzes.

Unter einem "keramischen Versatz" wird auf dem Gebiet der Keramik eine Zusammensetzung aus einer oder mehreren Komponenten verstanden, aus der durch einen Brand, insbesondere einen Sinterbrand, eine Keramik, also ein keramischer Werkstoff, herstellbar ist. Als Komponenten keramischer Versätze sind verschiedenste keramische Rohstoffe bekannt, beispielsweise verschiedenste silikatische oder oxidische Rohstoffe, wie beispielsweise Rohstoffe auf Basis der Oxide Aluminiumoxid (Al₂O₃) oder Siliziumoxid (SiO₂). Keramische Versätze liegen üblicherweise in Form plastischer, formbarer Massen vor.

Aus einem solch keramischen Versatz herstellbare Keramiken, also keramische Werkstoffe, zeichnen sich durch besondere Eigenschaften aus. Diese Eigenschaften können beispielsweise eine hohe Festigkeit, eine hohe Temperaturbeständigkeit sowie eine hohe offene Porosität umfassen.

Es ist bekannt, keramische Werkstoffe in Form von keramischen Stiften zur Verfügung zu stellen, die aufgrund der besonderen Eigenschaften von Keramik besondere Verwendung finden. So können keramische Stifte aufgrund Ihrer hohen Festigkeit beispielsweise als Zusatzstoff in Baustoffen Verwendung finden, um die Festigkeit von Baustoffen positiv zu beeinflussen. Ferner können keramische Stifte aufgrund ihrer hohen Temperaturbeständigkeit beispielsweise für bei hohen Temperaturen ablaufende katalytische Prozesse verwendet werden. Vorteilhaft ist dabei auch die sich aus der hohen offenen Porosität ergebende große spezifische Oberfläche von keramischen Stiften. Aufgrund dieser großen spezifischen Oberfläche können keramische Stifte sehr effektiv für katalytische Prozesse verwendet werden. Dabei kann entweder der keramische Werkstoff des keramischen Stiftes katalytisch aktiv sein, oder die Oberfläche der Poren kann mit katalytisch aktiven Stoffen belegt sein.

Problematisch ist im Stand der Technik die massentaugliche Herstellung solch keramischer Stifte. So umfasst eine massentaugliche Herstellung regelmäßig auch die Herstellung eines Bündels von einzelnen Strängen eines keramischen Versatzes, aus denen die keramischen Stifte zu brennen sind. Aufgrund der Natur keramischer Versätze neigen die einzelnen Stränge jedoch in erheblichem Maße dazu, miteinander zu verkleben. Durch solch miteinander verklebte Stränge eines keramischen Versatzes lassen sich jedoch vereinzelte keramische Stifte praktisch nicht herstellen. Vielmehr bilden die miteinander verklebten Stränge ein räumliches Netzwerk, das als solches auch nach dem Brand erhalten bleibt. Ein solch keramisches Netzwerk weist jedoch nicht die gewünschten Eigenschaften vereinzelter, keramischer Stifte auf. Insbesondere lässt sich ein solch keramisches Netzwerk kaum als Zusatzstoff in Baustoffen einsetzen. Ferner wird die aktive Oberfläche, die beispielsweise katalytisch aktiv sein oder als Träger katalytisch aktiver Stoffe dienen kann, erheblich eingeschränkt.

Der Erfindung liegt die Aufgabe zugrunde, ein Verfahren zur Behandlung eines keramischen Versatzes zur Verfügung zu stellen, durch welches vereinzelte Stränge des keramischen Versatzes herstellbar sind.

Insbesondere liegt der Erfindung die Aufgabe zugrunde, ein solches Verfahren zur Verfügung zu stellen, durch welches vereinzelte Stränge des keramischen Versatzes massentauglich herstellbar sind.

Insbesondere liegt der Erfindung die Aufgabe zugrunde, ein solches Verfahren zur Verfügung zu stellen, durch welches solch vereinzelte Stränge des keramischen Versatzes herstellbar und derart zur Verfügung stellbar sind, dass aus diesen Strängen vereinzelte keramische Stifte brennbar sind, insbesondere massentauglich brennbar sind.

Zur Lösung dieser Aufgabe wird erfindungsgemäß zu Verfügung gestellt ein Verfahren zur Behandlung eines keramischen Versatzes, umfassend die folgenden Schritte:
zur Verfügungstellung eines keramischen Versatzes;
zur Verfügungstellung eines Werkzeuges zum Formen des keramischen Versatzes:
   Formen des keramischen Versatzes durch das Werkzeug zu einem Bündel von einzelnen Strängen; und
   Trocknen wenigstens eines Abschnitts des Bündels; wobei
   der Schritt des Trocknens des wenigstens einen Abschnitts des Bündels derart durchgeführt wird, dass der wenigstens eine Abschnitt des Bündels getrocknet wird bevor der wenigstens eine Abschnitt nach dem Schritt des Formens mit einem anderen festen Körper als mit wenigstens einem der folgenden festen Körper in Kontakt steht: mit dem Werkzeug, mit wenigstens einem anderen Abschnitt des Bündels.

Die Erfindung beruht insbesondere auf der Erkenntnis, dass aus einem keramischen Versatz geformte Stränge insbesondere dann miteinander verkleben, wenn diese Stränge nach ihrem Formen mit einem festen Körper in Kontakt treten. Durch einen solchen Kontakt mit einem festen Körper können die einzelnen Stränge gegeneinander gedrückt werden und hierdurch miteinander verkleben. Bei einem solchen festen Körper kann es sich insbesondere um einen Körper zur Aufnahme der geformten einzelnen Stränge handeln, beispielsweise eine Schale, ein Tablett oder ein Band zur Aufnahme der geformten Stränge. Eine sich aus dieser Erkenntnis ergebende grundlegende Idee der Erfindung besteht danach darin, die geformten Stränge derart zu behandeln, dass diese bei Kontakt mit einem festen Körper nicht oder nur in reduziertem Umfang miteinander verkleben. Nach umfangreichen Versuchen wurde erfindungsgemäß überraschend festgestellt, dass ein solches Verkleben der Stränge bei Kontakt mit einem festen Körper dadurch verhindert werden kann, dass die geformten Stränge nach ihrer Formgebung jedoch noch vor ihrem Kontakt mit einem anderen festen Körper als dem Formwerkzeug getrocknet werden. Erfindungsgemäß wurde festgestellt, dass durch eine solche Trocknung der Stränge deren Oberfläche derart modifizierbar ist, dass die Stränge nach einer solch zumindest oberflächlichen Trocknung nicht mehr oder in nur deutlich reduziertem Umfang miteinander verkleben. Nach der Trocknung der Stränge können diese daher mit einem festen Körper in Kontakt treten, also beispielsweise der Oberfläche einer Aufnahmeeinrichtung zur Aufnahme der Stränge, da die erfindungsgemäß zumindest oberflächlich getrockneten Stränge in diesem Fall nicht mehr oder in nur deutlich reduziertem Umfang miteinander verkleben.

Auf Basis dieser Erkenntnisse beruht insbesondere auch der erfindungsgemäße Verfahrensschritt des Trocknens, nach welchem wenigstens ein Abschnitt des Bündels derart getrocknet wird, dass dieser wenigstens eine Abschnitt des Bündels getrocknet wird bevor dieser wenigstens eine Abschnitt nach dem Schritt des Formens mit einem anderen festen Körper als mit wenigstens einem der folgenden festen Körper in Kontakt steht: mit dem Werkzeug, mit wenigstens einem anderen Abschnitt des Bündels. Dieser jeweils getrocknete Abschnitt des Bündels wurde danach erfindungsgemäße getrocknet, bevor er mit einem festen Körper in Kontakt trat, der zu einem Verkleben der Stränge des Abschnitts dieses Bündels hätte führen können; vielmehr stand der Abschnitt bei seinem Trocknen allenfalls noch mit dem Werkzeug in Kontakt, durch das er zuvor geformt worden war, oder mit einem anderen Abschnitt des Bündels, wodurch jedoch jeweils ein Drücken der Stränge dieses Abschnitts gegeneinander nicht hervorgerufen wird. Bei dem wenigstens einen anderen Abschnitt des Bündels, mit welchem der Abschnitt vor seinem Trocknen möglicherweise hätte in Kontakt stehen können, kann es sich insbesondere um einen oder beide der zu dem zu trocknenden Abschnitt benachbarte Abschnitte des Bündels handeln, mit denen der zu trocknende Abschnitt zwangsläufig in Kontakt steht.

Gemäß der üblichen Nomenklatur wird erfindungsgemäß unter einem "Strang" ein langer und dünner sich erstreckender Gegenstand eines biegsamen Materials, im vorliegenden Fall also insbesondere eines biegsamen Materials in Form eines plastischen keramischen Versatzes, verstanden.

Ferner wird erfindungsgemäß unter dem Begriff "Bündel" gemäß der üblichen Nomenklatur eine lose zusammengefasste Menge verstanden, im vorliegenden Fall also eine lose zusammengefasste Menge der aus dem keramischen Versatz geformten Stränge.

Unter einem "Abschnitt" wird erfindungsgemäß die Gesamtheit der Stränge des Bündels zwischen zwei beabstandeten, jeweils normal zur Längsachse des Bündels verlaufenden Querschnitten durch das Bündel verstanden.

Bevorzugt wird das erfindungsgemäße Verfahren kontinuierlich durchgeführt. Bevorzugt werden dabei kontinuierlich aufeinanderfolgende Abschnitte des Bündels erfindungsgemäß getrocknet.

Durch das erfindungsgemäße Verfahren sind insoweit vereinzelte Stränge aus einem keramischen Versatz herstellbar.

Insbesondere sind solch vereinzelte Stränge durch das erfindungsgemäße Verfahren massentauglich dadurch herstellbar, dass kontinuierlich aufeinanderfolgende Abschnitte des Bündels erfindungsgemäß getrocknet werden. Hierdurch kann ein "endloses" Bündel getrockneter, vereinzelter Stränge hergestellt werden, die insbesondere einer weiteren Behandlung unterzogen werden können.

Die durch das erfindungsgemäße Verfahren hergestellten, vereinzelten Stränge können anschließend zur Herstellung von keramischen Stiften Verwendet werden.

Der erfindungsgemäße Schritt des Trocknens des wenigstens einen Abschnitts des Bündels der einzelnen Stränge kann derart durchgeführt werden, dass die einzelnen Stränge vollständig oder nur teilweise, insbesondere nur oberflächlich getrocknet werden. Erfindungsgemäß hat sich herausgestellt, dass es zur Verhinderung des Verklebens der einzelnen Stränge ausreichend ist, wenn diese nur oberflächlich getrocknet werden. Aus verfahrensökonomischen Gründen ist daher bevorzugt vorgesehen, dass der Schritt des Trocknens des wenigstens einen Abschnitts des Bündels derart durchgeführt wird, dass die Stränge oberflächlich getrocknet werden.

Erfindungsgemäß hat sich herausgestellt, dass bereits eine sehr kurze Trockendauer ausreichend sein kann, den wenigstens einen Abschnitt des Bündels derart zu trocknen, insbesondere oberflächlich zu trocknen, dass deren anschließende Verklebung vermieden werden kann. Nach einer bevorzugten Ausführungsform kann vorgesehen sein, dass der Schritt des Trocknens des wenigstens einen Abschnitts des Bündels für maximal 10 Sekunden erfolgt, insbesondere für eine Dauer im Bereich von 1 bis 10 Sekunden und besonders bevorzugt für eine Dauer im Bereich von 5 bis 10 Sekunden. Erfindungsgemäß hat sich herausgestellt, dass eine solche Trockendauer zum einen aus verfahrensökonomischen Gründen vorteilhaft ist, da das Bündel von Strängen nur sehr kurz getrocknet und anschließend seiner weiteren Behandlung unterzogen werden kann. Ferner hat sich erfindungsgemäß herausgestellt, dass durch eine solch kurze Trockendauer eine Deformation oder das unkontrollierte Abreißen der einzelnen Stränge verhindert werden kann.

Innerhalb des Bündels können sich die einzelnen Stränge zumindest teilweise gegenseitig berühren. Bevorzugt berühren sich die Stränge innerhalb des Bündels jedoch nicht. Dies hat insbesondere den Vorteil, dass die Stränge innerhalb des Abschnitts des Bündels, der erfindungsgemäß getrocknet wird, umfassend getrocknet werden kann.

Bei dem "anderen festen Körper" mit dem der wenigstens einen Abschnitt des Bündels erfindungsgemäß nicht in Kontakt tritt, bevor dieser Bereich nicht erfindungsgemäß getrocknet worden ist, kann es sich grundsätzlich um einen beliebigen festen Körper, der nicht das Formwerkzeug und/oder wenigstens einem anderen Abschnitt des Bündels darstellt, handeln. Beispielsweise kann es sich bei diesem anderen festen Körper um eine Einrichtung handeln, mit der der Bereich des Bündels von Strängen nach seiner Formung und Trocknung in Kontakt tritt, also beispielsweise eine Einrichtung zur Aufnahme der geformten und erfindungsgemäß getrockneten Stränge.

Um den wenigstens einen Abschnitt des Bündels von einzelnen Strängen erfindungsgemäß zu trocknen, kann erfindungsgemäß auf beliebige Mittel zurückgegriffen werden, die zur Trocknung eines keramischen Versatzes verwendbar sind, insbesondere auch die aus dem Stand der Technik bekannten Mittel zur Trocknung von keramischen Versätzen. Wie oben ausgeführt, wird das Verfahren und insbesondere auch das Trocknen bevorzugt kontinuierlich durchgeführt, wobei bevorzugt aufeinanderfolgende Abschnitte des Bündels erfindungsgemäß getrocknet werden. Bevorzugt wird der wenigstens eine, besonders bevorzugt die aufeinander folgenden Abschnitt aktiv getrocknet. Insbesondere erfolgt die Trocknung durch Beaufschlagung des wenigstens einen oder der aufeinander folgenden Abschnitte durch insbesondere aktive Beaufschlagung mit einem Heiz- beziehungsweise Trockenmittel. Nach einer Ausführungsform erfolgt das Trocknen des wenigstens einen Abschnitts des Bündels durch dessen Beaufschlagung mit wenigstens einem der folgenden Mittel: Heißluft, Wärmestrahlung oder Mikrowellenstrahlung. Erfindungsgemäß wurde festgestellt, dass das Bündel von Strängen besonders vorteilhaft durch eines oder mehrere dieser Mittel getrocknet werden kann, um deren Verklebung zu verhindern. Wärmestrahlung kann insbesondere in Form von Infrarotstrahlung vorgesehen sein. Bevorzugt kann vorgehen sein, dass das Bündel von einzelnen Strängen an einem solchen Mittel vorbeigeführt wird, so dass das Mittel das Bündel beaufschlagen und trocknen kann.

Besonders bevorzugt erfolgt das Trocknen des wenigstens einen Abschnitts Bündels mittels Heißluft. Besonders bevorzugt erfolgt das Trocknen des wenigstens einen Abschnitts des Bündels durch dessen Beaufschlagung mit Heißluft aus einem Heißluftgebläse. Erfindungsgemäß wurde festgestellt, dass die Stränge hierdurch besonders schnell und schonend oberflächlich derart getrocknet werden können, dass diese anschließend nicht mehr miteinander verkleben. Insbesondere kann die Beaufschlagung mit Heißluft, insbesondere durch ein Heißluftgebläse, für die vorbezeichnete Dauer erfolgen.

Nach einer bevorzugten Ausführungsform kann vorgesehen sein, dass das Trocknen des wenigstens einen Abschnitts des Bündels durch Heißluft mit einer Temperatur im Bereich zwischen 100°C bis 700°C, insbesondere im Bereich zwischen 350° bis 650°C erfolgt. Insbesondere bei Trocknung mittel Heißluft in einem solchen Temperaturintervall ist es möglich, die einzelnen Stränge oberflächlich und schonend derart zu trocknen, dass diese anschließend nicht mehr miteinander verkleben.

Nach einer bevorzugten Ausführungsform erfolgt der Schritt des Trocknens des wenigsten einen Abschnitts des Bündels unmittelbar nach dem Formen des Bündels. Der Schritt des Trocknens des wenigstens einen Abschnitts des Bündels erfolgt insoweit zeitlich und verfahrenstechnisch unmittelbar nach dem Schritt des Formens des Bündels. Zum einen hat dies den verfahrenstechnischen Vorteil, dass die Stränge des Bündels unmittelbar nach ihrer Formung getrocknet und hierdurch unmittelbar anschließend weiter behandelt werden können, was insbesondere auch verfahrensökonomisch vorteilhaft ist. Zum anderen hat dies insbesondere auch den Vorteil, dass ein Verkleben der Stränge hierdurch besonders wirkungsvoll unterdrückt werden kann, da den Strängen nach ihrem Formen keine Zeit gegeben wird, miteinander zu verkleben.

Nach einer bevorzugten Ausführungsform kann vorgesehen sein, dass der keramische Versatz durch das erfindungsgemäße Verfahren kontinuierlich zu einem Bündel von Strängen geformt wird. Ein solch kontinuierliches Formen ist verfahrensökonomisch vorteilhaft und erlaubt eine besonders massentaugliche Herstellung vereinzelter Stränge. Nach einer besonders bevorzugten Ausführungsform kann vorgesehen sein, dass das Formen des keramischen Versatzes mittels Extrusion erfolgt. Dies erlaubt in besonders einfacher Weise ein kontinuierliches Formen eines quasi "endlosen" Bündels von einzelnen Strängen. Ein solch kontinuierlich geformtes, quasi "endloses" Bündel kann sich von dem Werkzeug, an dem es geformt worden ist, kontinuierlich über einen weiteren Bereich, an dem es erfindungsgemäß getrocknet wird, bis zu einem sich daran anschließenden Bereich erstrecken, an dem das Bündel bereits mit einem anderen festen Körper in Kontakt stehen kann, beispielsweise in Form einer Aufnahmeeinrichtung für das geformte und getrocknete Bündel. Insbesondere, soweit das Formen mittels Extrusion erfolgt, kann nach einer besonders bevorzugten Ausführung vorgesehen sein, dass das Werkzeug zum Formen des keramischen Versatzes das Formwerkzeug beziehungsweise Mundstück eines Extruders ist.

Nach einer bevorzugten Ausführungsform kann vorgesehen sein, dass das Werkzeug zum Formen des keramischen Versatzes eine Platte mit Öffnungen umfasst, wobei der Schritt des Formens mittels Pressen des keramischen Versatzes durch die Öffnungen erfolgt. Insbesondere, soweit das Werkzeug zum Formen des Versatzes das Formwerkzeug eines Extruders ist, kann bevorzugt vorgesehen sein, dass das Formwerkzeug des Extruders die vorbezeichnete Platte umfasst.

Grundsätzlich können die Öffnungen der Platte eine beliebig geformte Querschnittsfläche aufweisen. Bevorzugt kann jedoch vorgesehen sein, dass die Öffnungen einer solchen Platte eine kreisförmige Querschnittsfläche aufweisen. Erfindungsgemäß wurde festgestellt, dass durch ein solches Werkzeug in Form einer Platte mit Öffnungen, insbesondere soweit diese Öffnungen eine kreisförmige Querschnittsfläche aufweisen, besonders einfach und massentauglich ein Bündel von einzelnen Strängen aus dem keramischen Versatz formbar ist, wobei die hierdurch geformten Stränge des Bündels besonders effektiv erfindungsgemäß derart getrocknet werden können, dass diese nicht miteinander verkleben. Insbesondere, soweit hierdurch geformte Stränge mittels Heißluft getrocknet werden, kann die Heißluft mittels solch kreisförmiger Öffnungen geformte Stränge besonders effektiv derart umströmen, dass diese oberflächlich derart trocknen, dass diese nicht miteinander verkleben.

Nach einer bevorzugten Ausführungsform kann vorgesehen sein, dass die Öffnung der Platte mit einer kreisförmigen Querschnittsfläche einen Durchmesser im Bereich von 0,5 bis 2 mm aufweisen, besonders bevorzugt einen Durchmesser im Bereich von 0,8 bis 1,4 mm. Erfindungsgemäß wurde festgestellt, dass sich hierdurch Stränge mit einem Durchmesser formen lassen, die zum einen eine ausreichende Stabilität aufweisen, sodass diese während ihrer Behandlung nicht reißen, und die zum anderen sehr effektiv zumindest oberflächlich derart getrocknet werden können, so dass diese nicht miteinander verkleben.

Nach einer bevorzugten Ausführungsform kann vorgesehen sein, dass die kreisförmigen Öffnungen der Platte mit einer kreisförmigen Querschnittsfläche rasterförmig an der Platte angeordnet sind. Nach einer bevorzugten Ausführungsform kann vorgesehen sein, dass die Öffnungen einen Mindestabstand im Bereich von 2 bis 6 mm, noch bevorzugter in einem Bereich von 3 bis 5 mm aufweisen. Erfindungsgemäß wurde festgestellt, dass sich bei einem solchen Abstand der Öffnungen die durch die Öffnungen geformten Stränge des Bündels besonders effektiv trocknen lassen.

Nach einer bevorzugten Ausführungsform kann vorgesehen sein, dass die Öffnungen der Platte einen maximalen Durchmesser von 3 mm aufweisen.

Nach einer bevorzugten Ausführungsform kann vorgesehen sein, dass die Platte, insbesondere die Ausgangsseite der Platte, an dem die durch die Platte geformten Stränge aus der Platte austreten, vertikal angeordnet ist. Hierdurch kann zusätzlich besonders effektiv verhindert werden, dass die Stränge unmittelbar nach ihrem Austreten aus der Platte miteinander verkleben.

Nach einer bevorzugten Ausführungsform kann vorgesehen sein, dass die Stränge eine kreisförmige Querschnittsfläche aufweisen. Diese Querschnittsfläche ist die Querschnittsfläche der Stränge senkrecht zur Längsachse beziehungsweise Längserstreckung der Stränge. Erfindungsgemäß wurde festgestellt, dass solche Stränge mit einer kreisförmigen Querschnittsfläche zum einen eine hohe Grünfestigkeit aufweisen, sodass sie stabil sind und nicht dazu tendieren zu reißen, und zum andere besonders effektiv oberflächlich getrocknet werden können, um ein Verkleben zu unterdrücken.

Nach einer besonders bevorzugten Ausführungsform kann vorgesehen sein, dass das Bündel Stränge umfasst, die einen Durchmesser unter 3 mm aufweisen. Dieser Durchmesser ist wiederum der Durchmesser quer zur Längsachse beziehungsweise Längserstreckung der Stränge. Besonders bevorzugt umfasst das Bündel Stränge mit einem Durchmesser im Bereich von 0,5 bis 2 mm und besonders bevorzugt mit einem Durchmesser im Bereich von 0,8 bis 1,4 mm. Wie oben ausgeführt, wurde erfindungsgemäß festgestellt, dass Stränge mit einem solchen Durchmesser zum einen eine ausreichende Grünfestigkeit aufweisen und zum anderen besonders effektiv getrocknet werden können.

Bei dem für das erfindungsgemäße Verfahren zur Verfügung gestellten keramischen Versatz kann es sich grundsätzlich um einen beliebigen keramischen Versatz handeln. Bevorzugt wird ein plastisch verformbarer Versatz zur Verfügung gestellt.

Nach einer besonders bevorzugten Ausführungsform kann vorgesehen sein, dass ein nicht-basischer Versatz zur Verfügung gestellt wird. Bekanntermaßen handelt es sich bei einem nicht-basischen keramischen Versatz um einen solchen, dessen Hauptoxide nicht MgO und CaO sind und der diese Oxide daher insbesondere nur in geringen Anteilen umfasst. Nach einer bevorzugten Ausführungsform kann vorgesehen sein, dass der für das erfindungsgemäße Verfahren zur Verfügung gestellte keramische Versatz eine chemische Zusammensetzung aufweist, der eine Gesamtmasse an den Oxiden MgO und CaO unter 25 Masse-%, besonders bevorzugt unter 15 Masse-% umfasst.

Bevorzugt kann vorgesehen sein, dass der keramische Versatz ein nicht-basischer keramischer Versatz ist, und dessen Hauptoxide nicht-basische Oxide sind, insbesondere eines oder mehrerer der folgenden Oxide: Al₂O₃, SiO₂, TiO₂, V₂O₅ und WO₃. Nach einer bevorzugten Ausführungsform kann vorgesehen sein, dass der keramische Versatz eine chemische Zusammensetzung aufweist, der wenigstens 75 Masse-%, noch bevorzugter wenigstens 85 Masse-% eines oder mehrere der folgenden Oxide umfasst: Al₂O₃, SiO₂, TiO₂, V₂O₅ und WO₃. Nach einer Fortbildung dieses Erfindungsgedankens können gleichzeitig die Oxide MgO und CaO in den oben bezeichneten Massenanteilen, vorliegen.

Die vorbezeichneten Angaben in Masse-% sind jeweils bezogen auf die Gesamtmasse des zur Verfügung gestellten keramischen Versatzes.

Die chemische Zusammensetzung ist jeweils bestimmt gemäß DIN 51418-1:2008-08 und DIN 51418-2:2015-03.

Bei dem für das erfindungsgemäße Verfahren zur Verfügung gestellten keramischen Versatz kann es sich bevorzugt um einen feinkeramischen Versatz handeln, also einen Versatz mit einer feinen Körnung. Insbesondere liegen bevorzugt wenigstens 90 Masse-% der Partikel des zur Verfügung gestellten keramischen Versatzes in einer Korngröße unter 250 µm vor, bestimmt gemäß durch Siebanalyse nach DIN 66165-1:2022-06 und DIN 66165-2:2016-08, soweit ausschließlich Korngrößen über 20 µm vorliegen; soweit auch Korngrößen darunter vorliegen, werden sämtliche Korngrößen unter 100 µm durch Laserdiffraktion nach ISO 13320:2020-01 bestimmt.

Erfindungsgemäß wurde festgestellt, dass sich besonders vorteilhaft ein solch feinkeramischer Versatz durch das erfindungsgemäße Verfahren behandeln lässt.

Der durch das erfindungsgemäße Verfahren behandelte keramische Versatz kann anschließend weiter behandelt werden. Insbesondere kann sich an den Schritt des Trocknens des Bündels eine weitere Behandlung anschließen. Insbesondere kann das Bündel, nachdem es erfindungsgemäß in einem Bereich getrocknet worden ist, anschließend an diesem Bereich auf eine Aufnahmeeinrichtung aufgenommen werden. Bei einer solchen Aufnahmeeinrichtung kann es sich beispielsweise um ein Tablett, eine Schale oder ein Band handeln, der den getrockneten Bereich des Bündels aufnimmt, um ihn anschließend einer weiteren Behandlung zuzuführen.

Nach einer Ausführungsform kann daher vorgesehen sein, dass sich an den Schritt des Trocknens des Bündels an einem Bereich des Bündels das Aufnehmen dieses Bereichs auf eine Aufnahmeeinrichtung anschließt.

Der, beispielsweise auf eine Aufnahmeeinrichtung aufgenommene Bereich des Bündels, kann anschließend weiter getrocknet werden, bis er einen gewünschten Restfeuchtegehalt aufweist, um ihn beispielsweise anschließend einem Brand, insbesondere einem Sinterbrand zu unterwerfen.

Nach einer Ausführungsform kann vorgesehen sein, dass das erfindungsgemäße Verfahren den Schritt des Zerkleinerns des Bündels nach dem Schritt des Trocknens umfasst. Dieser Schritt des Zerkleinerns kann bevorzugt durchgeführt werden, nachdem das Bündel auf eine Aufnahmeeinrichtung aufgenommen und gegebenenfalls weiter getrocknet worden ist. Durch diesen Schritt des Zerkleinerns können die getrockneten Stränge insbesondere auf eine für den Brand gewünschte Länge zerkleinert werden. Bevorzugt wird das Bündel besonders schonend zerkleinert, beispielsweise auf einem Rütteltisch, in einer Trommel, durch einen Walzenbrecher oder durch andere schonende Brechaggregate. Nach einer Ausführungsform kann vorgesehen sein, dass das erfindungsgemäße Verfahren den Schritt des Brennens der Stränge nach dem Schritt des Trocknens umfasst. Dieser Schritt des Brennens kann nach dem Schritt des Zerkleinerns der Stränge durchgeführt werden. Bevorzugt erfolgt dieses Brennen als Sinterbrand, wird also derart durchgeführt, dass der keramische Versatz, aus dem die Stränge bestehen, zu einer Keramik in Form von keramischen Stiften sintert. Die Brenntemperatur richtet sich nach der Zusammensetzung des jeweils verwendeten keramischen Versatzes. Bevorzugt erfolgt der Brand bei einer Temperatur von wenigstens 450°C und besonders bevorzugt bei einer Temperatur im Bereich von 550° bis 1.400°C. Als Haltezeit bei Maximaltemperatur hat sich ein Zeitraum von 0,5 bis 2 Stunden als vorteilhaft erwiesen. Bevorzugt können die Stränge während des Brennens in einer keramischen Schale aufgenommen sein, bevorzugt einer keramischen Schale aus einem nicht-oxidischen keramischen Werkstoff, beispielsweise aus Siliziumkarbid.

Nach dem Brennen werden aus den Strängen keramische Stifte erhalten. Diese keramischen Stifte können einer anschließenden Behandlung oder Verwendung zugeführt werden.

Nach einer Ausführungsform kann vorgesehen sein, dass die erhaltenen keramischen Stifte zerkleinert werden, insbesondere auf eine gewünschte Länge für deren abschließende Verwendung.

Gegenstand der Erfindung sind auch keramische Stifte, umfassend die folgenden Merkmale:
die Stifte bestehen aus einer nicht-basischen, gesinterten Keramik;
die Stifte weisen eine Dicke unter 3 mm auf;
die Stifte weisen eine Verhältnis von Länge:Dicke von über 2,5 auf.

Die keramischen Stifte sind bevorzugt durch das erfindungsgemäße Verfahren, wie hierin ausgeführt, hergestellt.

Die nicht-basische Keramik der Stifte weist bevorzugt die hierin offenbarte Zusammensetzung des hierin offenbarten, für das erfindungsgemäße Verfahren zur Verfügung gestellten nicht-basischen keramischen Versatzes auf.

Die Stifte weisen bevorzugt eine Dicke unter 3 mm auf. Bevorzugt weisen die Stifte eine kreisförmige Querschnittsfläche auf, mit einer Querschnittsfläche längs zur Längsachse beziehungsweise Längserstreckung der Stifte. Bevorzugt weisen die Stifte mit einer kreisförmigen Querschnittsfläche einen Durchmesser im Bereich von 0,5 bis 2 mm, besonders bevorzugt im Bereich von 0,7 bis 1,2 mm auf.

Die erfindungsgemäßen keramischen Stifte weisen ein Verhältnis von Länge:Dicke von über 2,5 auf, bevorzugt ein solches Verhältnis im Bereich von 2,5 bis 40 und besonders bevorzugt im Bereich von 5 bis 20.

Erfindungsgemäß wurde festgestellt, dass erfindungsgemäße keramische Stifte mit einer solchen Dimensionierung zum einen besonders gut handhabbar sind und zum anderen ein besonders hohes Verhältnis von Oberfläche zu Volumen aufweisen. Hierdurch können die erfindungsgemäßen keramischen Stifte insbesondere besonders effektiv für katalytische Prozesse verwendet werden, beispielsweise als Träger katalytisch aktiver Stoffe.

Gegenstand der Erfindung ist auch die Verwendung der erfindungsgemäßen keramischen Stifte als Zusatzstoff in Baustoffen, insbesondere in keramischen Baustoffen, besonders bevorzugt in feuerfesten keramischen Baustoffen. Insbesondere können die keramischen Stifte in solchen Baustoffen verwendet werden, um die Eigenschaften der feuerfesten keramischen Baustoffe zu beeinflussen, insbesondere deren physikalische Eigenschaften, wie beispielsweise deren Temperaturwechselbeständigkeit oder deren mechanische Eigenschaften, insbesondere deren Elastizitätsmodul, zu beeinflussen.

Gegenstand der Erfindung ist auch die Verwendung der erfindungsgemäßen keramischen Stifte für katalytische Prozesse, insbesondere als Trägermaterial katalytisch aktiver Stoffe für katalytische Prozesse.

Gegenstand der Erfindung ist auch eine Vorrichtung zur Behandlung eines keramischen Versatzes, umfassend die folgenden Merkmale:
ein Werkzeug, geeignet zum Formen eines keramischen Versatzes zu einem Bündel von einzelnen Strängen; und
eine Trockenvorrichtung, geeignet zum Trocknen wenigstens eines Abschnitts des Bündels derart, dass der wenigstens eine Abschnitt des Bündels trockenbar ist, bevor der wenigstens eine Abschnitt nach dem Formen mit dem Werkzeug mit einem anderen festen Körper als mit wenigstens einem der folgenden festen Körper in Kontakt steht: mit dem Werkzeug, mit wenigstens einem anderen Abschnitt des Bündels.

Die erfindungsgemäße Vorrichtung kann insbesondere zur Durchführung des erfindungsgemäßen Verfahrens dienen. Die Komponenten der Vorrichtung können daher insbesondere wie hierin offenbart für das erfindungsgemäße Verfahren geeignet sein.

Weitere Merkmal der Erfindung ergeben sich aus den Ansprüchen, den Figuren des Ausführungsbeispiels und der zugehörigen Figurenbeschreibung.

Sämtliche Merkmale der Erfindung können, einzeln oder in Kombination, beliebig miteinander kombiniert sein.

Nachfolgend werden Ausführungsbeispiele der Erfindung näher erläutert.

Zur Erläuterung der Ausführungsbeispiels ist dargestellt in
- Figur 1: ein schematisches Ausführungsbeispiel einer erfindungsgemäßen Vorrichtung, die zur Durchführung des ersten und zweiten Ausführungsbeispieles des erfindungsgemäßen Verfahrens der Erfindung dient; und
- Figur 2: das Werkzeug zum Formen des keramischen Versatzes der Vorrichtung gemäß Figur 1.

### Erstes Ausführungsbeispiel eines erfindungsgemäßen Verfahrens sowie einer erfindungsgemäßen Vorrichtung

Für das erste Ausführungsbeispiel des erfindungsgemäßen Verfahrens wurde zunächst zur Verfügung gestellt ein nicht-basischer, plastisch verformbarer Versatz auf Basis der oxidischen Rohstoffe Aluminiumoxid und Sepiolith. Diese oxidischen Rohstoffe wurden zusammen mit Wasser und einem üblichen organischen Bindemittel in Form von Polyethylenoxid in einem Misch- und Knetaggregat miteinander vermischt, bis ein plastisch verformbarer Versatz erhalten wurde.

Der Versatz wies die folgende chemische Zusammensetzung, bestimmt gemäß DIN 51418-1:2008-08 und DIN 51418-2:2015-03 auf, jeweils bezogen auf die Gesamtmasse des Versatzes:

| | |
|---|---|
| Al₂O₃: | 90 Masse-% |
| SiO₂: | 7,95 Masse-% |
| Fe₂O₃: | 0,15 Masse-% |
| TiO₂: | 0,95 Masse-% |
| CaO: | 0,25 Masse-% |
| MgO: | 0,25 Masse-% |
| Na₂O + K₂O: | 0,45 Masse-% |

Der Versatz lag als feinkeramischer Versatz vor, wobei 100 Masse-% der Partikel des Versatzes in einer Korngröße unter 100 µm und 90 Masse-% der Partikel des Versatzes in einer Korngröße unter 35 µm vorlagen, jeweils bezogen auf die Gesamtmasse des Versatzes und bestimmt mittels Laserdiffraktion nach ISO 13320:2020-01.

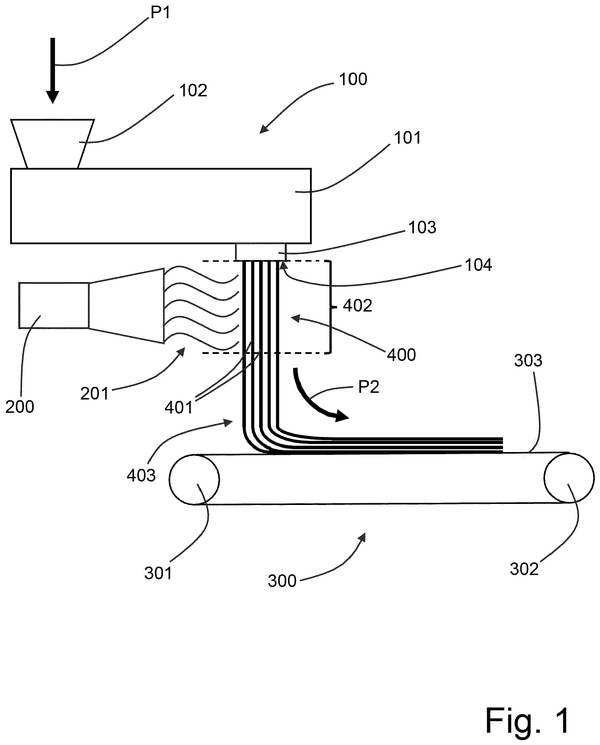

Dieser keramische Versatz wurde anschließend durch ein Ausführungsbeispiel einer erfindungsgemäßen Vorrichtung gemäß Figur 1 behandelt.

Die Vorrichtung gemäß Figur 1 ist in ihrer Gesamtheit mit dem Bezugszeichen 1 gekennzeichnet. Die Vorrichtung 1 umfasst einen Schneckenextruder 100, eine Trockenvorrichtung 200 sowie einen Aufnahmeeinrichtung 300.

Der Schneckenextruder 100 umfasst einen Schneckenzylinder 101, in dem eine elektromotorisch angetriebene Extruderschnecke (nicht dargestellt) angeordnet ist. An einem Ende des Schneckenzylinder 101 ist ein Eingabetrichter 102 angeordnet, über den ein durch den Schneckenextruder 100 zu bearbeitender keramische Versatz in den Schneckenzylinder 101 eingebbar ist, angedeutet durch den Pfeil P1. Ein durch den Eingabetrichter 102 in den Schneckenextruder 100 eingegebener keramischer Versatz wird im Schneckenzylinder 101 durch die Extruderschnecke bis zu dem, dem Eingabetrichter 102 gegenüberliegenden Ende des Schneckenzylinder 101 gefördert, wo der Versatz durch den Rotationsdruck der Extruderschnecke durch ein Formwerkzeug 103 gepresst wird. Die Austrittsseite 104 des Formwerkzeuges 103 verläuft horizontal nach unten ausgerichtet.

Benachbart zum Schneckenextruder 100 ist die Trockenvorrichtung 200 in Form eines Heißluftgebläses angeordnet. Die Trockenvorrichtung 200 ist derart angeordnet, dass durch diese ein durch das Formwerkzeug 103 gepresster keramischer Versatz unmittelbar nach seinem Verlassen der Austrittsseite 104 mit Heißluft 201 beaufschlagbar ist.

Schließlich ist mit Abstand unterhalb des Schneckenextruders 100 und der Trockenvorrichtung 200 die Aufnahmeeinrichtung 300 in Form eines Bandförderers angeordnet. Die Aufnahmeeinrichtung 300 umfasst eine Antriebsrolle 301, eine Umlenkrolle 302 sowie ein um die Antriebsrolle 301 und die Umlenkrolle 302 laufendes, von der Antriebsrolle 301 antreibbares Förderband 303. Die Aufnahmevorrichtung 300 ist derart unterhalb des Schneckenextruders 100 angeordnet, dass ein den Schneckenextruder 100 durch die Austrittsseite 104 verlassender keramische Versatz schwerkraftbedingt auf dem Förderband 303 zu liegen kommt und insoweit durch diese förderbar ist, angedeutet durch den Pfeil P2.

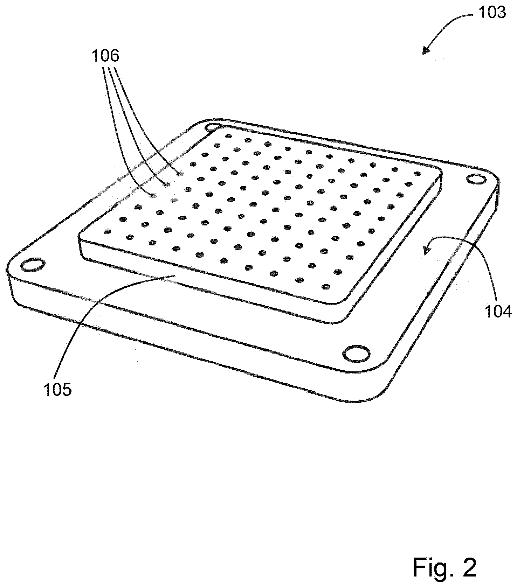

Das Formwerkzeug 103 ist in Figur 2 näher dargestellt. Dabei ist das Formwerkzeug in Figur der besseren Darstellung halber "falsch herum" dargestellt; in der Verwendungsstellung ist das Formwerkzeug 103, wie in Figur 1 dargestellt, mit seiner Austrittsseite 104 nach unten ausgerichtet am Schneckenextruders 100 angeordnet.

Das Formwerkzeug 103 weist eine in wesentlichen tafelförmige Struktur auf und umfasst eine Platte 105 mit rasterförmig angeordneten Öffnungen 106. Die Öffnungen 106 weisen jeweils eine kreisförmige Querschnittsfläche mit einem Durchmesser von 1,1 mm auf. Die Dicke der Platte 105 beträgt 10 mm, was auch der Länge der Öffnungen 106 entspricht. Die Öffnungen 106 sind derart angeordnet, dass sie jeweils an den Kreuzungspunkten eines rechtwinkligen Rasters mit 10 x 10 Kreuzungspunkten angeordnet sind, so dass die Platte 105 insgesamt einhundert Öffnungen 106 aufweist. Der Schneckenextruder 100 ist derart eingerichtet, dass durch diesen ein keramischer Versatz mit Extrusionsdrücken im Bereich von 25 bis 60 bar durch die Öffnungen 106 der Platte 105 pressbar und hierdurch ein Bündel 400 von einzelnen Strängen 401 aus dem keramischen Versatz formbar ist. Die Austrittsseite 104 der Platte 105 ist dabei, wie oben ausgeführt, horizontal nach unten weisend angeordnet, so dass die einzelnen Stränge 401 des Bündels 400 nach deren Austritt aus den Öffnungen 106 diese vertikal frei nach unten hängend verlassen. Insgesamt ist durch jede der Öffnungen 106 jeweils ein einzelner Strang formbar, so dass durch die Platte 105 insgesamt ein Bündel von 100 einzelnen Strängen 401 aus dem keramischen Versatz formbar ist.

Die oben bezeichnete keramische Masse des ersten Ausführungsbeispieles wurde durch die Vorrichtung 1 wie nachfolgend behandelt.

Zunächst wurde die keramische Masse gemäß Pfeil P1 über den Eingabetrichter 102 in den Schneckenextruder 100 eingegeben und dort im Schneckenzylinder 101 durch die Extruderschnecke bis zu dem Formwerkzeug 103 gefördert. Am Formwerkzeug 103 wurde der keramische Versatz mit einem Extrusionsdruck innerhalb des oben bezeichneten Bereichs durch die Öffnungen 106 gepresst, so dass ein Bündel 400 von einzelnen Strängen 401 aus dem keramischen Versatz geformt wurde, die die Öffnungen 106 vertikal frei nach unten hängend verließen. Die geformten Stränge 401 wiesen jeweils eine kreisförmige Querschnittsfläche mit einem Durchmesser auf, der geringfügig unter dem Durchmesser der Öffnungen 3 lag und etwa 1,0 mm betrug.

Unmittelbar nach Verlassen des Formwerkzeuges 103 wurde das Bündel 400 mit der Heißluft 201 der Trockenvorrichtung 200 beaufschlagt und hierdurch getrocknet. Dabei wurde durch die Heißluft 201 jeweils ein Abschnitt 402 des Bündels 400 getrocknet, bevor dieser Abschnitt 402 nach seiner Formung mit einem anderen festen Körper als mit dem Formwerkzeug 103 und dem zu dem Abschnitt 402 benachbarten Abschnitt 403 des Bündels 400 in Kontakt stand. Durch die Trockenvorrichtung 200 wurde Heißluft 201 mit einer Temperatur von etwa 500°C und einer Dauer von etwa 7 Sekunden auf den Abschnitt 402 geblasen, so dass die Stränge 401 dieses Abschnitts 402 des Bündels 400 oberflächlich durch die Heißluft 201 getrocknet wurden.

Die entsprechend oberflächlich getrockneten Stränge 401 wurden anschließend, gemäß Pfeil P2, auf dem Förderband 303 der Aufnahmeeinrichtung 300 abgelegt und durch das Förderband 303 weiter transportiert, um die getrockneten Stränge 401 einer weitergehenden Behandlung zu unterziehen.

Die Behandlung des keramischen Versatzes durch die Vorrichtung 100 wurde als kontinuierliches Verfahren durchgeführt, wobei kontinuierlich ein "endloses" Bündel 400 von Strängen 401 geformt und durch kontinuierliches Vorbeiführen des Bündels 400 an der Heißluft 201 kontinuierlich aufeinander folgende Abschnitt 402 durch die Trockenvorrichtung 200 getrocknet wurden.

Die weitere Behandlung der getrockneten und auf dem Förderband 303 abgelegten Stränge 402 ist in Figur 1 nicht dargestellt und war wie folgt:
Die getrockneten Stränge 401 wurden einer weiteren Trocknung unterzogen, durch die diese vollständig getrocknet wurden. Diese weitere Trocknung geschah bei einer Temperatur von 25°C für eine Dauer von 48 Stunden.

Die insoweit abschließend getrockneten Stränge 401 wurde anschließend schonend in einer Mahltrommel gebrochen, so dass die Stränge 401 überwiegend eine Länge unter 20 mm aufwiesen.

Die gebrochenen Stränge 401 wurden schließlich einem keramischen Brand unterworfen. Der keramische Brand wurde in einem elektrisch beheizten Ofen durchgeführt, wobei eine Maximaltemperatur von 1.400°C für eine Dauer von etwa 2 Stunden gehalten wurde.

Während des keramischen Brandes ruhten die Stränge 401 in einer keramischen Schale aus Siliziumkarbid.

Nach dem Brand wurden aus den Strängen 401 keramische Stifte erhalten. Diese Stifte bestanden aus einer nicht-basischen, gesinterten Keramik, die die oben bezeichnete oxidische Zusammensetzung aufwies. Die Stifte wiesen einen Durchmesser von etwa 0,88 mm auf. Ferner wiesen die keramischen Stifte Längen im Bereich von etwa 5 bis 15 mm und damit ein Verhältnis von Länge:Dicke im Bereich von etwa 5,7 bis 17,0 auf.

Die keramischen Stifte wurden anschließend als Zusatzstoff in einem feuerfesten keramischen Baustoff verwendet, um dessen Temperaturwechselbeständigkeit zu erhöhen.

### Zweites Ausführungsbeispiel eines erfindungsgemäßen Verfahrens

Das zweite Ausführungsbeispiel entsprach dem oben beschriebenen ersten Ausführungsbeispiel mit den wie nachfolgend beschriebenen Unterschieden.

Für das Verfahren wurde ein nicht-basischer, keramischer Versatz zur Verfügung gestellt, der die folgenden Komponenten in den folgenden Massenanteilen, bezogen auf die Gesamtmasse des Versatzes, aufwies:

| | |
|---|---|
| TiO₂-basierter Rohstoff: | 81,5 Masse-% |
| Bentonit: | 6 Masse-% |
| Ammoniummetavanadat: | 2,5 Masse-% |
| Glasfaser: | 10 Masse-%. |

Der TiO₂-basierte Rohstoff umfasste neben TiO₂ insbesondere auch chemische Anteile an WO₃.

Diese Zusammensetzung wurde mit Wasser und einem organischen Bindemittel in Form von Polyethylenoxid in einem Aggregat gemischt und geknetet. Der Versatz wies anschließend die folgende chemische Zusammensetzung, bezogen auf die Gesamtmasse des Versatzes, auf, bestimmt gemäß DIN 51418-1:2008-08 und DIN 51418-2:2015-03:

| | |
|---|---|
| SiO₂: | 8,8 Masse-% |
| Al₂O₃: | 2,9 Masse-% |
| Fe₂O₃: | 0,25 Masse-% |
| TiO₂: | 74,70 Masse-% |
| CaO + MgO: | 2,7 Masse-% |
| Na₂O + K₂O: | 0,2 Masse-% |
| V₂O₅: | 2,0 Masse-% |
| WO₃: | 8,45 Masse-%. |

Der TiO₂-Rohstoff wies eine Korngröße auf, bei der 100 Masse-% der Partikel in einer Korngröße unter 100 µm und 85 Masse-% der Partikel in einer Korngröße unter 2,5 µm vorlagen, jeweils bezogen auf die Gesamtmasse des TiO₂-Rohstoffes und bestimmt mittels Laserdiffraktion nach ISO 13320:2020-01.

Der Bentonit wies eine Korngröße auf, bei der 100 Masse-% der Partikel in einer Korngröße unter 100 µm vorlagen, bezogen auf die Gesamtmasse Bentonits und bestimmt mittels Laserdiffraktion nach ISO 13320:2020-01.

Die Glasfasern wiesen einen Durchmesser von 5 µm und eine Länge von 4,5 mm auf.

Der Versatz wurde gemäß dem ersten Ausführungsbeispiel geformt, getrocknet und anschließend auf eine Aufnahmeeinrichtung abgelegt. Anschließend wurden die Stränge durch Rütteln auf einer Rüttelplatte gebrochen.

Der keramische Brand erfolgte bei einer Maximaltemperatur von 580°C bei einer Haltezeit von 4 Stunden. Die keramische Bindung wurde über die Glasfasern erreicht, deren Glasübergangstemperatur bei etwa bei 525°C lag.

Die danach erhaltenen keramischen Stifte wiesen einen Durchmesser von 0,93 mm auf, wobei diese eine Länge im Bereich von etwa 10 bis 20 mm aufwiesen. Damit wiesen die Stifte ein Verhältnis von Länge: Dicke im Bereich von etwa 10,8 bis 21,5 auf.

Die keramischen Stifte fanden anschließend Verwendung als aktives katalytisches Material in einem katalytischen Prozess.

## Patentansprüche

1. Verfahren zur Behandlung eines keramischen Versatzes, umfassend die folgenden Schritte:
A. zur Verfügungstellung eines keramischen Versatzes;
B. zur Verfügungstellung eines Werkzeuges zum Formen des keramischen Versatzes:
C. Formen des keramischen Versatzes durch das Werkzeug zu einem Bündel von einzelnen Strängen; und
D. Trocknen wenigstens eines Abschnitts des Bündels; wobei
E. der Schritt des Trocknens des wenigstens einen Abschnitts des Bündels derart durchgeführt wird, dass der wenigstens eine Abschnitt des Bündels getrocknet wird bevor der wenigstens eine Abschnitt nach dem Schritt des Formens mit einem anderen festen Körper als mit wenigstens einem der folgenden festen Körper in Kontakt steht: mit dem Werkzeug, mit wenigstens einem anderen Abschnitt des Bündels.

2. Verfahren nach Anspruch 1, wobei das Trocknen durch Beaufschlagung mit wenigstens einem der folgenden Mittel erfolgt: Heißluft, Wärmestrahlung oder Mikrowellenstrahlung.

3. Verfahren nach wenigstens einem der vorhergehenden Ansprüche, wobei das Trocknen unmittelbar nach dem Formen des Bündels erfolgt.

4. Verfahren nach wenigstens einem der vorhergehenden Ansprüche, wobei das Werkzeug eine Platte mit Öffnungen ist und wobei der Schritt des Formens mittels Pressen des keramischen Versatzes durch die Öffnungen erfolgt.

5. Verfahren nach Anspruch 4, wobei die Öffnungen eine kreisförmige Querschnittsfläche aufweisen.

6. Verfahren nach wenigstens einem der Ansprüche 4 bis 5, wobei die Öffnungen einen maximalen Durchmesser von 3 mm aufweisen.

7. Verfahren nach wenigstens einem der vorhergehenden Ansprüche, wobei das Werkzeug das Formwerkzeug eines Extruders ist.

8. Verfahren nach wenigstens einem der vorhergehenden Ansprüche, wobei der keramische Versatz ein nicht-basischer keramischer Versatz ist.

9. Verfahren nach wenigstens einem der vorhergehenden Ansprüche, wobei das Bündel Stränge umfasst, die einen Durchmesser unter 3 mm aufweisen.

10. Verfahren nach wenigstens einem der vorhergehenden Ansprüche, wobei das Bündel Stränge umfasst, die eine kreisförmige Querschnittsfläche aufweisen.

11. Verfahren nach wenigstens einem der vorhergehenden Ansprüche, wobei der getrocknete Bereich des Bündels nach seinem Trocknen auf einem festen Körper abgelegt wird.

12. Verfahren nach wenigstens einem der vorhergehenden Ansprüche, umfassend den Schritt des Zerkleinerns der Stränge nach dem Schritt des Trocknens.

13. Verfahren nach wenigstens einem der vorhergehenden Ansprüche, umfassend den Schritt des Brennens der Stränge nach dem Schritt des Trocknens.

14. Keramische Stifte, umfassend die folgenden Merkmale:
14.1 die Stifte bestehen aus einer nicht-basischen, gesinterten Keramik;
14.2 die Stifte weisen eine Dicke unter 3 mm auf;
14.3 die Stifte weisen eine Verhältnis von Länge:Dicke von über 2,5 auf.

15. Vorrichtung zur Behandlung eines keramischen Versatzes, umfassend die folgenden Merkmale:
15.1 ein Werkzeug (103), geeignet zum Formen eines keramischen Versatzes zu einem Bündel (400) von einzelnen Strängen (401); und
15.2 eine Trockenvorrichtung (200), geeignet zum Trocknen wenigstens eines Abschnitts (402) des Bündels (400) derart, dass der wenigstens eine Abschnitt (402) des Bündels (400) trockenbar ist, bevor der wenigstens eine Abschnitt (402) nach dem Formen mit dem Werkzeug (103) mit einem anderen festen Körper als mit wenigstens einem der folgenden festen Körper in Kontakt steht: mit dem Werkzeug (103), mit wenigstens einem anderen Abschnitt (403) des Bündels (400).

## Geänderte Patentansprüche

### Geänderte Patentansprüche gemäss Regel 137(2) EPÜ.

1. Verfahren zur Behandlung eines keramischen Versatzes, umfassend die folgenden Schritte:
A. zur Verfügungstellung eines keramischen Versatzes;
B. zur Verfügungstellung eines Werkzeuges (103) zum Formen des keramischen Versatzes:
C. Formen des keramischen Versatzes durch das Werkzeug (103) zu einem Bündel (400) von einzelnen Strängen (401); und
D. Trocknen wenigstens eines Abschnitts (402) des Bündels (400); wobei
E. der Schritt des Trocknens des wenigstens einen Abschnitts (402) des Bündels (400) derart durchgeführt wird, dass der wenigstens eine Abschnitt (402) des Bündels (400) getrocknet wird bevor der wenigstens eine Abschnitt (402) nach dem Schritt des Formens mit einem anderen festen Körper als mit wenigstens einem der folgenden festen Körper in Kontakt steht: mit dem Werkzeug (103), mit wenigstens einem anderen Abschnitt des Bündels (400); wobei
F. das Werkzeug (103) eine Platte (105) mit Öffnungen (106) ist, wobei der Schritt des Formens mittels Pressen des keramischen Versatzes durch die Öffnungen (106) erfolgt, und wobei die Öffnungen (106) eine kreisförmige Querschnittsfläche mit einem Durchmesser im Bereich von 0,5 bis 2 mm aufweisen.

2. Verfahren nach Anspruch 1, wobei das Trocknen durch Beaufschlagung mit wenigstens einem der folgenden Mittel erfolgt: Heißluft, Wärmestrahlung oder Mikrowellenstrahlung.

3. Verfahren nach wenigstens einem der vorhergehenden Ansprüche, wobei das Trocknen unmittelbar nach dem Formen des Bündels (400) erfolgt.

4. Verfahren nach wenigstens einem der vorhergehenden Ansprüche, wobei die Öffnungen (106) einen maximalen Durchmesser von 3 mm aufweisen.

5. Verfahren nach wenigstens einem der vorhergehenden Ansprüche, wobei das Werkzeug (103) das Formwerkzeug eines Extruders (100) ist.

6. Verfahren nach wenigstens einem der vorhergehenden Ansprüche, wobei der keramische Versatz ein nicht-basischer keramischer Versatz ist.

7. Verfahren nach wenigstens einem der vorhergehenden Ansprüche, wobei das Bündel (400) Stränge (401) umfasst, die einen Durchmesser unter 3 mm aufweisen.

8. Verfahren nach wenigstens einem der vorhergehenden Ansprüche, wobei das Bündel (400) Stränge umfasst, die eine kreisförmige Querschnittsfläche aufweisen.

9. Verfahren nach wenigstens einem der vorhergehenden Ansprüche, wobei der getrocknete Abschnitt (402) des Bündels (400) nach seinem Trocknen auf einem festen Körper abgelegt wird.

10. Verfahren nach wenigstens einem der vorhergehenden Ansprüche, umfassend den Schritt des Zerkleinerns der Stränge (401) nach dem Schritt des Trocknens.

11. Verfahren nach wenigstens einem der vorhergehenden Ansprüche, umfassend den Schritt des Brennens der Stränge (401) nach dem Schritt des Trocknens.

12. Keramische Stifte, hergestellt durch das Verfahren nach wenigstens einem der vorhergehenden Ansprüche, umfassend die folgenden Merkmale:
12.1 die Stifte bestehen aus einer nicht-basischen, gesinterten Keramik;
12.2 die Stifte weisen eine Dicke unter 3 mm auf;
12.3 die Stifte weisen eine Verhältnis von Länge:Dicke von über 2,5 auf.

13. Vorrichtung zur Behandlung eines keramischen Versatzes, umfassend die folgenden Merkmale:
13.1 ein Werkzeug (103), geeignet zum Formen eines keramischen Versatzes zu einem Bündel (400) von einzelnen Strängen (401); und
13.2 eine Trockenvorrichtung (200), geeignet zum Trocknen wenigstens eines Abschnitts (402) des Bündels (400) derart, dass der wenigstens eine Abschnitt (402) des Bündels (400) trockenbar ist, bevor der wenigstens eine Abschnitt (402) nach dem Formen mit dem Werkzeug (103) mit einem anderen festen Körper als mit wenigstens einem der folgenden festen Körper in Kontakt steht: mit dem Werkzeug (103), mit wenigstens einem anderen Abschnitt (403) des Bündels (400); wobei
13.3 das Werkzeug (103) eine Platte (105) mit Öffnungen (106) ist, wobei der Schritt des Formens mittels Pressen des keramischen Versatzes durch die Öffnungen (106) erfolgt, und wobei die Öffnungen (106) eine kreisförmige Querschnittsfläche mit einem Durchmesser im Bereich von 0,5 bis 2 mm aufweisen.
